# EUROPEAN PATENT SPECIFICATION

(11) **EP 0 561 920 B1**
(45) Date of publication and mention of the grant of the patent: **15.03.1995**
(21) Application number: 92900877.9
(22) Date of filing: 17.12.1991
(51) Int. Cl.: F24J 2/00

(54) **A SOLAR ENERGY COLLECTOR**
SOLARENERGIEKOLLEKTOR
CAPTEUR D'ENERGIE SOLAIRE

(30) Priority: 21.12.1990 FI 906338
(43) Date of publication of application: 29.09.1993
(73) Proprietor: HELIOTHERM OY, SF-48600 Karhula (FI)
(72) Inventor: MÖLLER, Holger, SF-49400 Hamina (FI)
(74) Representative: Barlow, Roy James
(86) International application number: FI9100392
(87) International publication number: WO9211495

(56) References cited:
- DE-A- 2 734 521
- DK-B- 160 218
- FI-A- 813 131
- GB-A- 2 147 408
- US-A- 4 601 281
- US-A- 4 644 935

## Description

The present invention relates to a solar energy collector including an elongated reflecting element whose cross-section is curved and which has a reflecting inner surface, the reflecting element being mounted in an inclined position with the reflecting inner surface facing towards the sun; there being a receiving element placed in the linear focal point of the reflecting element and extending substantially through the whole length of the reflecting element and receiving the reflected solar radiation. This receiving element is connected to a circulating system containing liquid and operating to heat the liquid.

In known collecting devices of this type, i.e. GB-A-2 147 408, the circulation of the liquid is effected in a continuous and uniform manner while the liquid becomes heated in the receiving element. However, the temperature generally remains so low that an effective operation of the collector together with a salt solution and phase change heat exchanger is of no use unless a heat pump, or additional energy sources such as oil or electric energy, are utilized. This is due to the fact that the water fed to the accumulator should at least meet the minimum temperature requirement of 95°C.

The pipe elements of the known solar energy collecting devices are also complex and expensive and generally require maintenance because of narrow conduits and poor circulation.

Generally, it can be stated that sufficient attention has not been given to the primary drawback, the poor heat acceleration, of such collecting devices. If, for instance, on a partly cloudy day the sun comes out from behind the clouds, the circulation during the next 10 minutes will be marginal and underheated, and thus the output of the collecting device will remain unsatisfactory.

The object of the above invention is to eliminate these drawbacks and to provide a collecting device capable of achieving sufficient heat accumulation and sufficient temperature of the circulation liquid under relatively disadvantageous conditions of solar radiation and which also provides a rather cost-effective and maintenance-free construction.

The invention is characterised by the features of claim 1.

A container for the liquid space, to maintain a certain counterpressure, may for instance be a spring loaded bellows arranged on top of the upper valve from which the liquid is further guided to circulate through a relatively thin circulation pipe.

The receiving element itself is preferably comprised of a number of relatively thin parallel pipes, where the valves can be situated on respective collecting bodies at the ends of the pipes.

The circulation liquid can comprise a solution having a good heat conductivity with a boiling point in the range of 120° to 140°C.

The invention and its other features and advantages are described in the following by an example and with reference to the enclosed drawing, in which:
Fig. 1 shows partly schematically the collecting device according to the invention, as viewed from the side;
Fig. 2 shows the construction of the collecting element as viewed from the end thereof; and
Figs. 3 and 4 show the liquid valve of the device on a larger scale as viewed from the side and as a cross section.

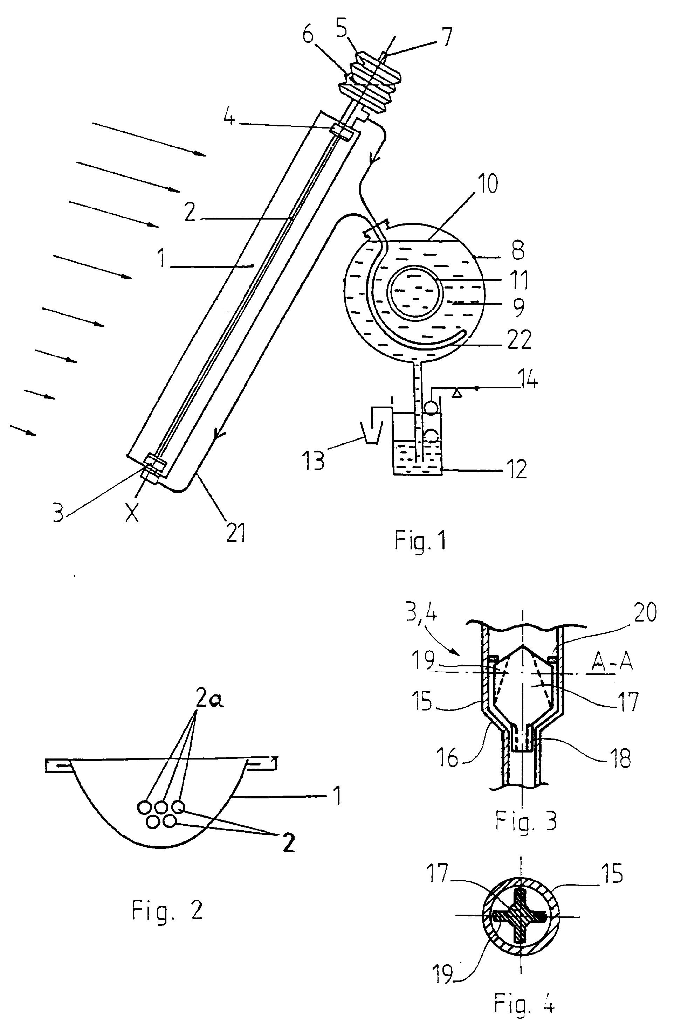

The essential part of the collecting device is a reflecting element 1 which is elongate and parabolic in cross section, as best seen in Fig. 2. The inner surface of the reflecting element has a coating which reflects solar radiation very well.

Receiving element 2, situated in the linear focal point of the reflecting element is comprised of a number of parallel thin pipes where a major part of the radiation can be trapped in the gaps within the bundle of pipes when heat radiation is focused on the bundle of pipes. This has the advantage of both a large effective target surface and a minimum of radiation reflected back to the environment. The upper surface 2a of the pipes can be polished.

The swivelling axis x of the reflector joins the bundle of pipes 2 and the pipes remain in place when the reflector is turned according to the position of the sun.

The receiving element (the bundle of pipes 2) contains a circulation solution with a boiling point of, for example, about 130°C. The circulation is effected through a relatively thin circulation pipe 21 which forms heating element 22 in a heat accumulator 8. Heat accumulator 8 is also filled with a solution having good heat conductivity. The heat accumulator is a closed space and is exposed to underpressure above liquid surface 10.

Coiled service water pipe 11 providing the warm service water is placed inside the heat accumulator. Equalizing basin 12 is placed under the heat accumulator and is further provided with an overflow 13 and a limit switch 14 which, when the temperature is raised too high and liquid 9 expands, starts a forced discharge from element 11 or, alternatively, turns the reflector away from the sun.

The circulation liquid operates in two phases in such a way that it is allowed to discharge periodically from receiving element 2 each time only when it reaches its evaporation point. Therefore, both the lower and the upper parts of receiving element 2 are provided with fluid valves 3 and 4 respectively which allow only an upward flow. In addition, the upper end of the receiving element is provided with a space maintaining a counter pressure, in this case spring loaded bellows 5. In the Figure the upper surface of the liquid in the bellows is referenced 6 and the maintenance valve in the upper end of the bellows is referenced 7.

The collecting device operates in such a way that when the liquid in the receiving element 2 reaches its evaporation temperature, valve 4 opens and the steam discharges into the bellows 5. Thus lower valve 3 remains shut under the effect of the pressure.

After the receiving element has discharged, valve 4 closes and the lower valve 3 opens and allows the liquid to flow again into element 2. The hot liquid simultaneously continues to discharge from bellows 5 into heating element 22. In this way it is ensured that the circulation liquid cannot escape the receiving element under-heated, which is essential to the entire operation of accumulator 8.

Figs. 3 and 4 show a possible form for the valves. Valve member 17 is simply a float placed in a receptacle 15 at the ends of pipes 2 and made of material with a specific weight of the same magnitude as that of the circulation liquid. The conical surface of valve member 17 compresses receptacle 15 against conical surface 16 preventing the solution from flowing downwards in receptacle 15. The upper part of valve member 17 is provided with ribs 19 and the lower part thereof is provided with ribs 18 which are guided against the inner wall of receptacle 15 but allow the upward flow of the solution therebetween. Internal shoulder 20 in receptacle 15 limits the upward movement of valve member 17.

It was observed in a practical test that, for example, when the collecting device started to operate using cold circulation solution, the time duration to the first discharge of receiving element 2, or to the opening of valve 4, was about 70 seconds. After the collecting device reached its operating temperature, the duration of the cycle was correspondingly about 10 seconds. Pipes 2 as well as circulation pipe 21 were made of conventional thin-walled stainless steel with an outer diameter of 7 to 8 mm and wall thickness of 0.15 mm. The boiling point of the circulation liquid was about 130°C.

## Claims

1. A collecting device for solar energy including an elongated reflecting element (1) the cross-section of which is curved and which has a reflecting inner surface, the reflecting element being mounted in an inclined position with the reflecting inner surface towards the sun; and a receiving element (2) placed in the linear focal point of the reflecting element (1) and extending substantially through the entire length of the reflecting element and receiving reflected solar radiation, said receiving element being connected to a circulation system containing liquid, and the receiving element (2) operating to heat the said liquid, **characterized** in that both the upper and the lower ends of the receiving element (2) are provided with a fluid valve (3, 4) allowing upward flow of liquid only, a liquid space maintaining a certain counterpressure being arranged above the upper valve (4) from which liquid space the liquid is further guided to the circulation system, whereby the fluid valves (3, 4) operate periodically under the effect of solar heat radiation in such a way that the upper valve (4) opens when the liquid in the receiving element reaches its evaporation point and the lower valve (3) allows more liquid to flow into the receiving element (2) only after the receiving element (2) is substantially discharged.

2. A collecting device according to Claim 1, **characterized** in that the said liquid space is a spring loaded bellows (5); and that the circulation pipe (21) connected to the bellows (5) is so thin that the counterpressure is maintained in the bellows (5).

3. A collecting device according to Claim 1 or 2, **characterized** in that the receiving element (2) is comprised of a number of relatively thin parallel pipes, where the valves (3, 4) are situated in the receiving elements at the ends of the pipes.

4. A collecting device according to Claim 3, **characterized** in that the receiving element (2) comprises 5 to 7 thin-walled metal pipes which are spaced apart from each other.

5. A collecting device according to any of the preceding Claims, **characterized** in that the valve (3, 4) consists of an axially moving valve member (17) having a frusto-conical sealing face.

6. A collecting device according to Claim 5, **characterized** in that the valve member (17) comprises ribs (18, 19) guided at least partly against the inner surfaces of the valve housing, enabling the liquid to flow past the valve member (17).

7. A collecting device according to any of the preceding Claims, **characterized** in that a solution having a good heat conductivity and a boiling point of about 120° C is used as the circulation liquid.

8. A collecting device according to Claim 7, **characterized** in that the circulation liquid is forced through a heating element (22) placed in a heat accumulator (8).

9. A collecting device according to Claim 8, **characterized** in that the heat accumulator (8) is a heat exchanger with a service-water coil (11) or a similar device placed in it.

## Patentansprüche

1. Solarenergiekollektor mit einem länglichen Reflektorelement (1), dessen Querschnitt gekrümmt ist und das eine reflektierende innere Oberfläche hat, wobei das Reflektorelement in geneigter Stellung mit der reflektierenden inneren Oberfläche zur Sonne befestigt ist; und mit einem Empfängerelement (2), das im linearen Brennpunkt des Reflektorelementes (1) angeordnet ist und sich im wesentlichen über die gesamte Länge des Reflektorelementes erstreckt und die reflektierte Solarstrahlung aufnimmt, verbunden mit einem Flüssigkeit enthaltenden Zirkulationssystem, wobei das Empfängerelement (2) die Flüssigkeit erhitzt, dadurch gekennzeichnet, daß sowohl die oberen als auch die unteren Enden des Empfängerelementes (2) mit einem Flüssigkeitsventil (3, 4) versehen sind, das nur das Aufwärtsfließen der Flüssigkeit gestattet, ein Flüssigkeitsraum (5), der einen gewissen Gegendruck aufrechterhält, ist oberhalb des oberen Ventils (4) angeordnet, wobei die Flüssigkeit aus diesem Raum dem Zirkulationssystem zugeleitet wird, wobei die Flüssigkeitsventile (3, 4) periodisch unter der Einwirkung der Solarwärmestrahlung in der Weise arbeiten, daß das obere Ventil (4) öffnet, wenn die Flüssigkeit in dem Empfängerelement ihren Verdampfungspunkt erreicht, und das untere Ventil (3) nur dann gestattet, daß mehr Flüssigkeit in das Empfängerelement (2) fließt, wenn das Empfängerelement (2) im wesentlichen geleert ist.

2. Kollektor nach Anspruch 1, dadurch gekennzeichnet, daß der Flüssigkeitsraum ein federbelasteter Faltenbalg (5) ist; und daß das Zirkulationsrohr (21), das mit dem Faltenbalg (5) verbunden ist, so dünn ist, daß der Gegendruck in dem Faltenbalg (5) aufrechterhalten wird.

3. Kollektor nach Anspruch 1 oder 2, dadurch gekennzeichnet, daß das Empfängerelement (2) aus einer Anzahl relativ dünner paralleler Rohre besteht, wobei die Ventile (3, 4) in den Empfängerelementen an den Enden der Rohre angeordnet sind.

4. Kollektor nach Anspruch 3, dadurch gekennzeichnet, daß das Empfängerelement (2) aus 5 bis 7 dünnwandigen Metallrohren besteht, die mit Zwischenraum voneinander angeordnet sind.

5. Kollektor nach einem der vorangegangenen Ansprüche, dadurch gekennzeichnet, daß das Ventil (3, 4) aus einem axial sich bewegenden Ventilteil (17) besteht, das eine kegelstumpfartige Dichtungsfläche hat.

6. Kollektor nach Anspruch 5, dadurch gekennzeichnet, daß das Ventilteil (17) Rippen (18, 19) hat, die wenigstens teilweise gegen die inneren Oberflächen des Ventilgehäuses zwangsgeführt werden und die ermöglichen, daß die Flüssigkeit an dem Ventilteil (17) vorbeifließt.

7. Kollektor nach einem der vorangegangenen Ansprüche, dadurch gekennzeichnet, daß eine Lösung mit einer guten Wärmeleitfähigkeit und einem Siedepunkt von etwa 120° C als Zirkulationsflüssigkeit verwendet wird.

8. Kollektor nach Anspruch 7, dadurch gekennzeichnet, daß die Zirkulationsflüssigkeit durch ein Heizelement (22) geführt wird, das in einem Wärmespeicher (8) angeordnet ist.

9. Kollektor nach Anspruch 8, dadurch gekennzeichnet, daß der Wärmespeicher (8) ein Wärmeaustauscher ist mit einer darin angeordneten Brauchwasserrohrschlange (11) oder einer ähnlichen Einrichtung.

## Revendications

1. Dispositif collecteur d'énergie solaire, comprenant un élément réfléchissant (1) dont la section transversale est incurvée et ayant une surface intérieure réfléchissante, l'élément réfléchissant étant monté en position inclinée, la surface intérieure réfléchissante étant tournée vers le soleil; un élément récepteur (2) étant placé au point focal linéaire de l'élément réfléchissant (1), s'étendant sensiblement sur toute la longueur dans l'élément réfléchissant et recevant le rayonnement solaire réfléchi, ledit élément récepteur étant relié à un système de circulation contenant un liquide et l'élément récepteur (2) étant prévu pour chauffer ledit liquide, caractérisé en ce que à la fois les extrémités supérieure et inférieure de l'élément récepteur (2) sont pourvues d'une soupape de fluide (3, 4) permettant un écoulement montant du liquide seulement dans un espace pour ce liquide (5) en maintenant une certaine contre-pression par le fait qu'il est disposé au-dessus de la soupape supérieure (4), espace d'où le liquide est en outre guidé vers le système de circulation, de manière que les soupapes de fluide (3, 4) fonctionnent périodiquement sous l'effet du rayonnement thermique d'origine solaire, afin que la soupape supérieure (4) s'ouvre lorsque le liquide se trouvant dans l'élément récepteur atteint son point d'évaporation et la soupape inférieure (3) permette à plus de liquide de s'écouler en pénétrant dans l'élément récepteur (2), seulement après que cet élément récepteur (2) ait été pratiquement déchargé.

2. Dispositif collecteur selon la revendication 1, caractérisé en ce que ledit espace pour le liquide est constitué par un ensemble de soufflets (5), chargés par des ressorts; et en ce que le tuyau de circulation (21) relié aux soufflets (5) est d'une section transversale assez petite pour qu'une contre-pression est maintenue dans ces soufflets (5).

3. Dispositif collecteur selon la revendication 1 ou 2, caractérisé en ce que l'élément récepteur (2) est composé d'un certain nombre de tubes parallèles relativement minces, les soupapes (3, 4) étant situées dans les éléments récepteurs aux extrémités des tubes.

4. Dispositif collecteur selon la revendication 3, caractérisé en ce que l'élément récepteur (2) comprend de deux à trois tubes métalliques à parois minces, espacés les uns des autres.

5. Dispositif collecteur selon l'une quelconques des revendications précédentes, caractérisé en ce que la soupape (3, 4) est composée d'un opercule (17) à déplacement axial, ayant une face de siège tronconique.

6. Dispositif collecteur selon la revendication 5, caractérisé en ce que l'opercule (17) comprend des nervures (18, 19), guidées au moins partiellement contre les surfaces intérieures d'un carter de soupape, permettant au liquide de s'écouler une fois passé l'opercule (17).

7. Dispositif collecteur selon l'une quelconque des revendications précédentes, caractérisé en ce qu'une solution ayant une bonne conductibilité thermique et un point d'ébullition d'à peu près 120 °C est utilisée comme liquide de circulation.

8. Dispositif collecteur selon la revendication 7, caractérisé en ce que le liquide de circulation est soumis à un écoulement forcé dans un élément chauffant (22) placé dans l'accumulateur thermique (8).

9. Dispositif collecteur selon la revendication 8, caractérisé en ce que l'accumulateur thermique (8) est un échangeur de chaleur ayant un serpentin pour eau industrielle (11) ou un dispositif analogue, monté à l'intérieur.
